# EUROPÄISCHE PATENTANMELDUNG

(11) **EP 4 692 586 A1**
(43) Veröffentlichungstag der Anmeldung: **11.02.2026**
(21) Anmeldenummer: 25185312.3
(22) Anmeldetag: 25.06.2025
(51) Int. Cl.: F16D 51/14, F16D 65/22, F16D 121/04, F16D 125/66

(54) **RADIAL BETÄTIGBARE TROMMELBREMSE**

(30) Priorität: 08.08.2024 DE 102024122653
(71) Anmelder: KNORR-BREMSE Systeme für Nutzfahrzeuge GmbH, 80809 München (DE)
(72) Erfinder: Schröpf, Frederic, 94469 Deggendorf (DE); Iraschko, Johann, 85301 Schweitenkirchen (DE); Weber, Ralf, 80997 München (DE); Fischer, Rudolf, 85435 Erding (DE); Rguichi, Abdelaziz, 82140 Olching (DE); Markl, Michael, 94508 Schöllnach (DE)

(57) **Zusammenfassung**

Eine radial betätigbare Trommelbremse (1) für ein Nutzfahrzeug weist eine um eine Rotationsachse (AR) drehbar gelagerte Bremstrommel (2) auf, ein Ankergehäuse (5) mit Lageraufnahmen (51) für Bremsbeläge (3), wenigstens zwei in einem Aufnahmeraum der Bremstrommel (2) in jeweiligen Lageraufnahmen (52) des Ankergehäuses (5) gelagerte Bremsbeläge (3), wobei jeder der Bremsbeläge (3) einen Reibbelagträger (32), einen an diesem angeordneten Reibbelag (31) und ein an einer dem Reibbelag abgewandten Unterseite des Belagträgers (32) angeordnetes Druckstück (7) aufweist, das durch eine Öffnung (54) der jeweiligen Lageraufnahme (52) des Ankergehäuses (5) radial in Richtung der Rotationsachse (AR) der Bremstrommel (2) vorsteht, eine auf einer Zylinderhülse (51) des Ankergehäuses (5) angeordnete Zuspanneinrichtung (4) mit wenigstens einem Anpressteil, mit der die Bremsbeläge (3) durch an eine Mantelinnenfläche der Bremstrommel (2) in einer Zuspannrichtung (r) radial zur Rotationsachse (AR) der Bremstrommel (2) anpressbar sind, wobei in dem Aufnahmeraum der Bremstrommel (2) an jedem der Bremsbeläge (3) wenigstens eine sich an einer dem Bremsbelag (3) abgewandten Unterseite (53) der Lageraufnahme (52) des Ankergehäuses (5) anliegend abstützende Rückstellfeder vorgesehen ist, mit der der jeweilige Bremsbelag (3) aus einer an der Mantelinnenfläche (21) der Bremstrommel (2) anliegenden Bremsstellung in eine von der Mantelinnenfläche (21) der Bremstrommel (2) entfernte Nichbremsstellung bewegbar ist.

## Beschreibung

Die Erfindung betrifft eine radial betätigbare Trommelbremse gemäß dem Oberbegriff des Anspruchs 1.

Eine gattungsgemäße Trommelbremse ist beispielsweise aus der DE 10 2021 115 785 B3 bekannt. Solche Trommelbremsen weisen generell einen zylindertrommelförmigen Rotor auf, mit einer Innenseite des auch als Bremstrommel bezeichneten Rotors angeordneten Reibflächen. Eine Bremskraft wird dabei mit Bremsbelägen generiert, die gegen die innenliegende Reibfläche der Bremstrommel gedrückt werden.

Bei den hier betrachteten gattungsgemäßen Trommelbremsen, deren Kraftübersetzung derart gestaltet ist, dass eine axial zur Rotationsachse eingeleitete Kraft durch deren Umlenkung so verstärkt wird, dass die Reaktionskraft radial auf die Reibfläche der Bremstrommel wirkt, erfolgt das Andrücken der Bremsbeläge mittels eines in Richtung der Rotationsachse verschiebbaren Keils.

Dabei kann die Reaktionskraft unterteilt werden, indem mehrere radial auf die Reibfläche der Bremstrommel wirkende Bremsbeläge betätigt werden.

Die dafür benötigte Kraft wird durch einen in der Trommelbremse eingebauten Bremszylinder durch Belüften eines Betriebsbremskolbens des Bremszylinders mit Druckluft und einer damit verbundenen Verschiebung des Keils parallel zur Drehachse der Trommelbremse erzeugt.

Zum Lösen der Bremsen wird der Betriebsbremskolben entlüftet, wobei dieser aufgrund der elastischen Verformungen im System wieder in Richtung der ursprünglichen Position verschoben wird. Ist die elastische Verformung abgebaut, kann es passieren, dass der Betriebskolben und damit auch der Andruckkeil und der Bremsbelag nicht oder nicht vollständig in die Nichtbremsstellung zurückbewegt wird. D.h. die Bremsbeläge werden nicht aktiv von der Mantelinnenfläche der Trommel gelöst, so dass ein unerwünschtes Restschleifmoment im System verbleibt.

Aufgabe der vorliegenden Erfindung ist es, ein solches unerwünschtes Restschleifmoment zu unterbinden.

Die gestellte Aufgabe wird durch eine Trommelbremse mit den Merkmalen des Anspruchs 1 sowie durch eine Trommelbremse mit den Merkmalen des Anspruchs 10 gelöst.

Die erfindungsgemäße radial betätigbare Trommelbremse für ein Nutzfahrzeug weist eine um eine Rotationsachse drehbar gelagerte Bremstrommel auf.

Die Trommelbremse weist weiter ein Ankergehäuse mit Lageraufnahmen für Bremsbeläge sowie wenigstens zwei in einem Aufnahmeraum der Bremstrommel in jeweiligen Lageraufnahmen des Ankergehäuses gelagerte Bremsbeläge auf.

Jeder der Bremsbeläge weist einen Reibbelagträger, einen an diesem angeordneten Reibbelag und ein an einer dem Reibbelag abgewandten Unterseite des Belagträgers angeordnetes Druckstück auf, das durch eine Öffnung der jeweiligen Lageraufnahme des Ankergehäuses radial in Richtung der Rotationsachse der Bremstrommel vorsteht.

Die Trommelbremse weist weiter eine auf einer Zylinderhülse des Ankergehäuses angeordnete Zuspanneinrichtung auf, mit wenigstens einem Anpressteil, mit der die Bremsbeläge an eine Mantelinnenfläche der Bremstrommel in einer Zuspannrichtung radial zur Rotationsachse der Bremstrommel anpressbar sind.

In dem Aufnahmeraum der Bremstrommel ist an jedem der Bremsbeläge wenigstens eine sich an einer dem Bremsbelag abgewandten Unterseite der Lageraufnahme des Ankergehäuses anliegend abstützende Rückstellfeder vorgesehen, mit der der jeweilige Bremsbelag aus einer an der Mantelinnenfläche der Bremstrommel anliegenden Bremsstellung in eine von der Mantelinnenfläche der Bremstrommel entfernte Nichtbremsstellung bewegbar ist.

Durch die Vorsehung solcher Rückstellfedern wird in zuverlässiger Weise das Auftreten von Restschleifmomenten aktiv unterbunden.

Dadurch kann im Fahrbetrieb der Kraftstoffverbrauch des mit einer solchen Trommelbremse versehenen Nutzfahrzeugs gesenkt sowie die Standzeit der Reibpartner, Bremstrommel und Bremsbeläge, erhöht werden.

Ein weiterer Vorteil solcher Rückstellfedern besteht darin, einen Ansprechdruck für die Aktivierung der Trommelbremse definieren zu können. Da die Rückstellfedern stets mit Vorspannung verbaut werden, ist ein vorbestimmter Anpressdruck notwendig, um die Bremsbeläge der Trommelbremse in Zuspannrichtung zu bewegen.

Vorteilhafte Ausführungsvarianten der Erfindung sind Gegenstand der Unteransprüche.

Gemäß einer vorteilhaften Ausführungsvariante weist die Zuspanneinrichtung der Trommelbremse einen auf der Zylinderhülse des Ankergehäuses parallel zur Rotationsachse der Bremstrommel verschiebbaren Keilring und eine in dem Aufnahmeraum der Bremstrommel an dem Ankergehäuse drehfest angeordnete Bremszylinderanordnung zur Betätigung des Keilrings auf.

Mithilfe der Rückstellfedern ist es bei Einsatz einer solchermaßen ausgebildeten Zuspannrichtung auch ermöglicht, den Keilring sowie Kolben des Bremszylinders ohne Einsatz weiterer Federelemente in ihre Ausgangsstellung (Nichtbremsstellung) zurückzubewegen.

Gemäß einer vorteilhaften Ausführungsvariante ist die Rückstellfeder als Flachfeder oder als Wellfeder ausgebildet.

Die als Flachfeder oder als Wellfeder ausgebildete Rückstellfeder ist dabei gemäß einer ersten Ausführungsvariante zwischen einer dem Bremsbelag abgewandten Unterseite der Lageraufnahme des Ankergehäuses und einer der Unterseite der Lageraufnahme zugewandten, sich senkrecht zur Zuspannrichtung erstreckenden Fläche des Druckstücks vorgespannt angeordnet.

Gemäß einer vorteilhaften Weiterbildung weist das Druckstück ein an der Unterseite des Belagträgers angeordnetes, sich durch die Öffnung der jeweiligen Lageraufnahme des Ankergehäuses erstreckendes Halsstück und einen an diesem angeformten oder befestigten, auf dem Keilring aufsitzenden Andruckkeil auf.

Die Flachfeder oder Wellfeder stützt sich auf der der Unterseite der Lageraufnahme zugewandten, sich senkrecht zur Zuspannrichtung erstreckenden Fläche des Andruckkeils ab.

Nach einer bevorzugten Weiterbildung weist die Flachfeder oder Wellfeder Stützarme auf, die an der Unterseite der Lageraufnahme anliegen.

Die Stützarme liegen gemäß einer bevorzugten Weiterbildung gleitfähig an einer Unterseite der Lageraufnahme an.

Bei einer Wellfedern einsetzenden Ausführungsvariante liegt die jeweilige Wellfeder ortsfest an der Unterseite der Lageraufnahme verspannt an.

Eine solche Wellfeder zeichnet sich besonders bevorzugt durch eine degressive Federkennlinie aus, die hier vorteilhaft genutzt werden kann, da der Hub der Wellfeder durch reine Verformung der Wellfeder ermöglicht ist. Ein Gleiten zwischen Rückstellfeder und Ankergehäuse ist hier nicht notwendig.

Durch die degressive Federkennlinie ist ermöglicht, dass die Kraft zum Überwinden der Federkaft der Wellfeder beim Zuspannen der Bremse insbesondere bei größeren Zuspannhüben relativ gering ausfällt und damit die durch das Verformen der Wellfeder erforderliche Verlustkraft kleingehalten werden kann, was insgesamt zu einem verbesserten Wirkungsgrad der Trommelbremse führt.

Gemäß einer weiteren alternativen Ausführungsvariante, bei der jeweils eine Flachfeder zwischen zwei benachbarten Bremsbelägen angeordnet ist, liegt ein erster der Stützarme der Flachfeder an der der Unterseite der Lageraufnahme zugewandten, sich senkrecht zur Zuspannrichtung erstreckenden Fläche des Druckstücks eines ersten Bremsbelags und ein zweiter der Stützarme der Flachfeder an der der Unterseite der Lageraufnahme zugewandten, sich senkrecht zur Zuspannrichtung erstreckenden Fläche des Druckstücks eines zweiten Bremsbelags vorgespannt an.

Gemäß einer weiteren vorteilhaften alternativen Ausgestaltung einer erfindungsgemäßen Trommelbremse ist in dem Aufnahmeraum der Bremstrommel zwischen benachbarten Bremsbelägen wenigstens eine am Ankergehäuse befestigte Rückstellfeder angeordnet, die als Flachfeder mit wenigstens einem Stützarm ausgebildet ist, wobei der wenigstens eine Stützarm an der den Reibbelag tragenden Seite des Belagträgers eines der Bremsbeläge vorgespannt anliegt.

In einer bevorzugten Ausführungsvariante ist die Rückstellfeder als Flachfeder mit zwei Stützarmen ausgebildet, wobei ein erster der Stützarme an der den Reibbelag tragenden Seite des Belagträgers eines ersten Bremsbelags und ein zweiter der Stützarme an der den Reibbelag tragenden Seite des Belagträgers eines benachbarten zweiten Bremsbelags vorgespannt anliegt.

Die Befestigung dieser Ausführungsvarianten der Flachfeder erfolgt dabei bevorzugt über einen Rückhaltebolzen, der am Ankergehäuse angebracht ist.

Gemäß einer weiteren alternativen Ausgestaltung einer erfindungsgemäßen Trommelbremse sind die Rückstellfedern als Schraubenfedern ausgebildet.

Die Schraubenfedern sind dabei bevorzugt zwischen einer dem Bremsbelag abgewandten Unterseite der Lageraufnahme des Ankergehäuses und einer der Unterseite der Lageraufnahme zugewandten, sich senkrecht zur Zuspannrichtung erstreckenden Federteller des Andruckkeils oder des Druckstücks vorgespannt angeordnet.

Gemäß einer weiteren alternativen Ausführungsvariante einer erfindungsgemäßen Trommelbremse ist die Rückstellfeder als zwischen zwei benachbarten Bremsbelägen vorgespannte Zugfeder ausgebildet, die so zwischen zwei benachbarten Bremsbelägen vorgespannt ist, dass sie nach erfolgter Zuspannung der Bremsbeläge eine Rückstellzugkraft auf die Bremsbeläge ausübt.

Nachfolgend werden bevorzugte Ausführungsbeispiele anhand der beiliegenden Zeichnungen näher erläutert. Es zeigen:
- Fig. 1: eine schematische isometrische Ansicht einer Ausführungsvariante einer erfindungsgemäßen Trommelbremse,
- Fig. 2: eine Schnittansicht der in Fig. 1 gezeigten Trommelbremse ohne Darstellung der Bremstrommel,
- Fig. 3: eine Schnittansicht eines Ausschnitts einer ersten Ausführungsvariante einer erfindungsgemäßen Trommelbremse mit als Flachfeder ausgeführter Rückstellfeder zwischen Gehäuse und Andruckkeil,
- Fig. 4: eine Schnittansicht eines Ausschnitts einer zweiten Ausführungsvariante einer erfindungsgemäßen Trommelbremse mit als Wellfeder ausgeführter Rückstellfeder zwischen Gehäuse und Andruckkeil,
- Fig. 5: eine Schnittansicht eines Ausschnitts einer dritten Ausführungsvariante einer erfindungsgemäßen Trommelbremse mit als Schraubenfeder ausgeführter Rückstellfeder zwischen Gehäuse und Andruckkeil,
- Fig. 6: eine Schnittansicht eines Ausschnitts einer vierten Ausführungsvariante einer erfindungsgemäßen Trommelbremse mit als zwischen zwei benachbarten Bremsbelägen am Gehäuse befestigter Flachfeder, die seitlich auf dem jeweiligen Andruckkeil aufliegen, und
- Fig. 7: eine Schnittansicht eines Ausschnitts einer fünften Ausführungsvariante einer erfindungsgemäßen Trommelbremse mit als zwischen zwei benachbarten Bremsbelägen am Gehäuse befestigter Flachfeder, die seitlich auf dem jeweiligen Belaghalter aufliegen.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsbeläge, der Trommelbremse, der Bremstrommel, des Druckstücks, der Rückstellfedern und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

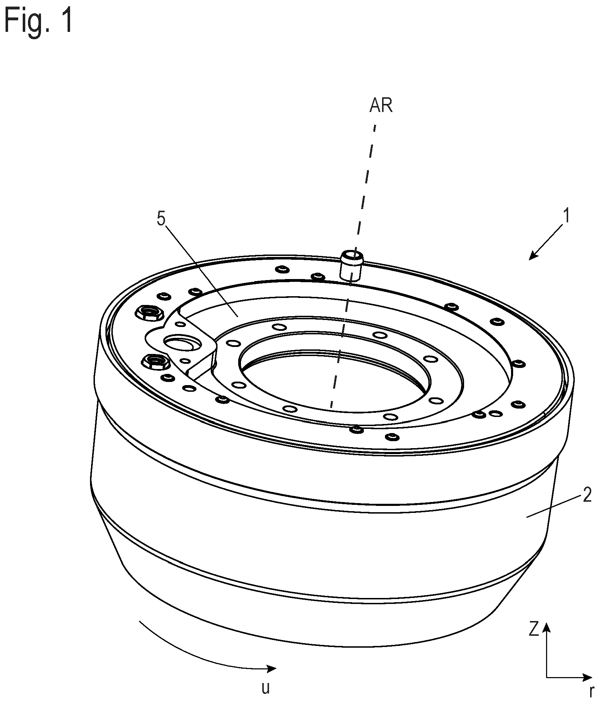

In **Figur 1** ist mit dem Bezugszeichen 1 insgesamt eine Ausführungsvariante einer erfindungsgemäßen Trommelbremse, insbesondere für den Einsatz an einem Nutzfahrzeug, bezeichnet.

Die Trommelbremse 1 weist eine um eine Rotationsachse AR drehbar gelagerte Bremstrommel 2 auf, die über ein Ankergehäuse 5 drehfest mit einer hier nicht dargestellten Nabe einer Radachse verbunden ist.

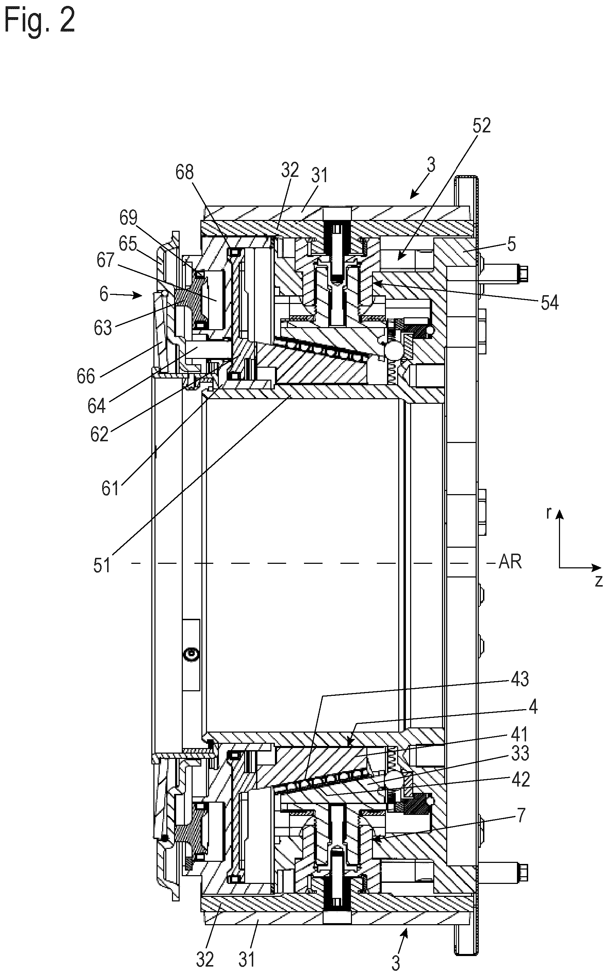

In einem Aufnahmeraum innerhalb der Bremstrommel 2 sind, wie in Figur 2 dargestellt, mehrere Bremsbeläge 3 gemäß einer ersten Ausführungsvariante mit einem jeweiligen Belagträger 32 und einem an diesem angeordneten Reibbelag 31 angeordnet. Die Bremsbeläge 3 sind dabei mit ihren Reibbelägen 31 einer Mantelinnenfläche der Bremstrommel 2 zugewandt angeordnet.

An dem Ankergehäuse 5 ist, wie weiter in Figur 2 dargestellt ist, eine Zuspanneinrichtung 4 mit einem auf einer Zylinderhülse 51 des Ankergehäuses 5 parallel zur Rotationsachse AR der Bremstrommel 2 verschiebbaren Keilring 41 angeordnet, mit dem die Bremsbeläge 3 an die als Reibfläche ausgebildete Mantelinnenfläche der Bremstrommel 2 radial zur Rotationsachse AR der Bremstrommel 2 (Richtung r in Figur 1 dargestellt) anpressbar sind.

Zur Übertragung der Bewegung des Keilrings 41 auf die Bremsbeläge 3 ist an einer dem Reibbelag 31 abgewandten Seite der Belagträger 32 ein jeweiliger Andruckkeil 33 als Teil eines jeweiligen Bremsbelags 3 angeordnet.

Zwischen dem Andruckkeil 33 und dem Belagträger 32 ist ein Druckstück 7 angeordnet. Das Druckstück 7 ist dabei in radialer Richtung form- und/oder reibschlüssig am Belagträger 32 gehalten.

Der Andruckkeil 33 liegt dabei auf einer Andruckfläche des Keilrings 41 auf.

Der Keilring 41 ist dabei vorzugsweise über einen Betriebsbremskolben 62 einer Bremszylinderanordnung 6 parallel zur Rotationsachse AR der Bremstrommel 2 aus einer Nichtbremsstellung in eine Bremsstellung in einer Richtung z verschiebbar.

Zwischen dem Keilring 41 und dem Andruckkeil 33 des Bremsbelags 3 ist zur Verminderung der Reibung zwischen der Andruckfläche des Keilrings 41 und dem Andruckkeil 33 des Bremsbelags 3 ein Schlitten 42 mit mehreren Wälzkörpern 43 angeordnet.

Die Bremszylinderanordnung 6 als Bestandteil der Zuspanneinrichtung 4 dient der Durchführung der radialen Anpressbewegung der Bremsbacken 3 an die Mantelinnenfläche der Bremstrommel 2.

Die Bremszylinderanordnung 6 weist ein ortsfest in dem Aufnahmeraum der Bremstrommel 2 an dem Ankergehäuse 5 befestigtes Gehäuse 61 auf.

Relativ zu diesem Gehäuse 61 ist der Betriebsbremskolben 62 parallel zur Drehachse AR der Bremstrommel 2 verschiebbar angeordnet.

Weiter weist die Bremszylinderanordnung 6 einen Feststellbremskolben 63 auf, der relativ zum Gehäuse 61 parallel zur Drehachse AR der Bremstrommel 2 verschiebbar und über ein Zwischenblech 65 mit der Federkraft eines bevorzugt als Scheibenfeder ausgebildeten Federelements 66 beaufschlagbar ist.

Die Bremszylinderanordnung 6 weist des Weiteren mehrere Stößel 64 auf, die der Übertragung einer Bewegung des Feststellbremskolbens 63 auf den Betriebsbremskolben 62 dienen.

Des Weiteren sind Druckluftzuführungen vorgesehen, die zum einen in einen Betriebsbremsdruckraum zwischen dem Gehäuse 61 und dem Betriebsbremskolben 62 und zum zweiten in einen Feststellbremsdruckraum 67 zwischen dem Gehäuse 61 und dem Feststellbremskolben 63 münden.

Wichtig für die Betätigung der Bremsbacken 3 ist dabei stets die Bewegung des Betriebsbremskolbens 62, die im Falle einer beabsichtigten Drosselung der Geschwindigkeit des Nutzfahrzeugs, einem sogenannten Betriebsbremsvorgang, durch Druckluftzuführung in den Betriebsbremsdruckraum bewirkt wird.

Im Falle einer beabsichtigten Feststellung der Bremse, die der Verhinderung eines unbeabsichtigten Wegrollens des Nutzfahrzeugs in einer Parksituation dient, wird in dem Feststellbremsdruckraum 67 im Fahrbetrieb vorhandene Druckluft aus dem Feststellbremsdruckraum 67 ausgelassen, was eine Verschiebung des Feststellbremskolbens 63 in Richtung des Betriebsbremskolbens 62 zur Folge hat. Die Verschiebung wird durch die Kraftausübung des Federelements 66 auf eine dem Betriebsbremskolben 62 abgewandte Rückseite des Feststellbremskolbens 63 verursacht.

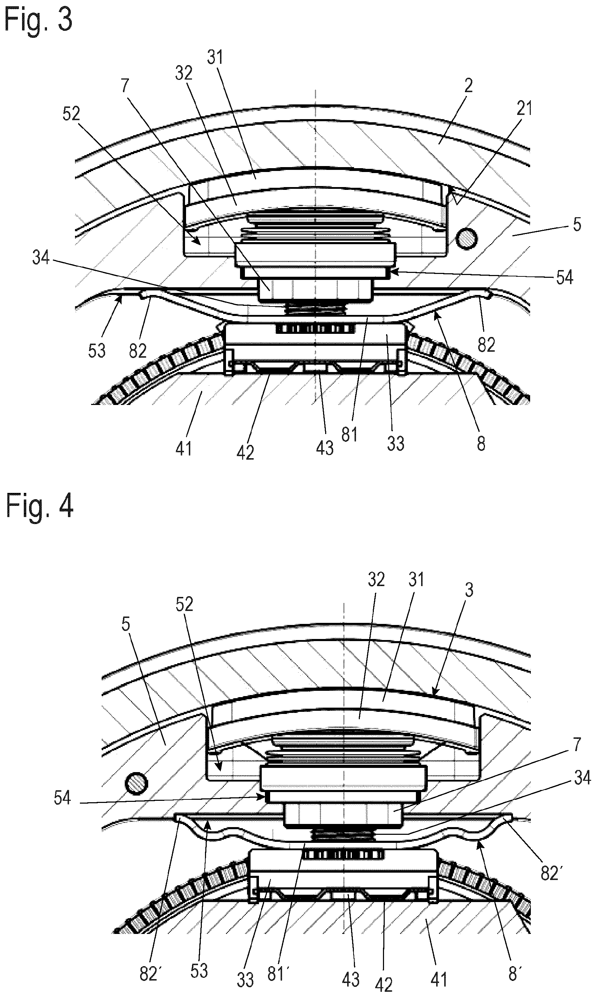

Wie in den **Figuren 3 bis 7** gezeigt ist, sind die Bremsbeläge 3 jeweils in Lageraufnahmen 52 des Ankergehäuses 5 gelagert.

Jede der Lageraufnahmen 52 weist eine Öffnung auf, durch die das Druckstück 7 radial in Richtung der Rotationsachse AR der Bremstrommel 2 vorsteht.

Alternativ zu der Zuspanneinrichtung 4 mit Keilring 41 und in den Aufnahmeraum 22 der Bremstrommel 2 an dem Ankergehäuse 5 drehfest angeordneten Bremszylinderanordnung 6 zur Betätigung des Keilrings 41 ist es prinzipiell auch denkbar, eine Zuspanneinrichtung mit wenigstens einem Anpressteil vorzusehen, mit der die Bremsbeläge 3 an eine Mantelinnenfläche 21 der Bremstrommel 2 in einer Zuspannrichtung r radial zur Rotationsachse AR der Bremstrommel 2 anpressbar sind.

Wie weiter in den Figuren 3 bis 7 gezeigt ist, ist in dem Aufnahmeraum der Bremstrommel 2 an jedem der Bremsbeläge 3 wenigstens eine sich an einer dem Bremsbelag 3 abgewandten Unterseite 53 der Lageraufnahme 52 des Ankergehäuses 5 anliegend abstützende Rückstellfeder vorgesehen, mit der der jeweilige Bremsbelag 3 aus einer an der Mantelinnenfläche 21 der Bremstrommel 2 anliegenden Bremsstellung in eine von der Mantelinnenfläche 21 der Bremstrommel 2 entfernte Nichtbremsstellung bewegbar ist.

Die Figuren 3 bis 7 zeigen dabei jeweils unterschiedliche Ausführungsvarianten solcher Rückstellfedern bzw. Anordnungen von Rückstellfedern im Aufnahmeraum der Bremstrommel 2.

Ein weiterer Vorteil solcher Rückstellfedern besteht darin, einen Ansprechdruck für die Aktivierung der Trommelbremse definieren zu können. Da die Rückstellfedern stets mit Vorspannung verbaut werden, ist ein vorbestimmter Anpressdruck notwendig, um die Bremsbeläge der Trommelbremse in Zuspannrichtung zu bewegen.

Ein solcher Ansprechdruck beträgt dabei vorzugsweise zwischen 0,15 bar und 0,25 bar, insbesondere 0,2 bar.

Bei der in Figur 3 gezeigten Ausführungsvariante ist die Rückstellfeder als Flachfeder 8 ausgebildet. Bei dieser Ausführungsvariante ist es hinreichend, für jeden Bremsbelag 3 genau eine solcher Flachfeder 8 vorzusehen. Die Flachfeder 8 weist dabei eine erste Abstützfläche 81 auf, von der sich beidseits Stützarme 82 erstrecken.

Die Flachfeder 8 ist dabei zwischen einer dem Bremsbelag 3 abgewandten Unterseite 53 der Lageraufnahme 51 des Ankergehäuses 5 und einer der Unterseite 53 der Lageraufnahme 51 zugewandten, sich senkrecht zur Zuspannrichtung r erstreckenden Fläche des Andruckkeils 33 vorgespannt angeordnet. Dazu liegt die Abstützfläche 81 auf der der Unterseite 53 der Lageraufnahme 51 zugewandten, sich senkrecht zur Zuspannrichtung r erstreckenden Fläche des Andruckkeils 33 auf. Die Stützarme 82 liegen an der Unterseite 53 der Lageraufnahme 51 an.

Denkbar ist prinzipiell auch, das Druckstück 7 mit einer solchen Auflagefläche zur Auflage der ersten Abstützfläche 81 der Flachfeder 8 auszugestalten. Wichtig ist, dass durch die vorgespannte Rückstellfeder nach Beendigung eines Bremshubs, bei dem der Bremsbelag 3 gegen die Mantelinnenfläche 21 der Bremstrommel 2 gedrückt wurde, der Bremsbelag 3 von der Mantelinnenfläche 21 der Bremstrommel 2 wegbewegt wird. Dies ist prinzipiell durch Abstützen der ersten Abstützfläche 81 der Flachfeder 8 auf eine der Unterseite 53 der Lageraufnahme 51, an der sich die Stützarme 82 abstützen, zugewandten Fläche eines fest mit dem Reibbelag 31 verbundenen Bestandteils des Bremsbelags 3 ermöglicht.

Die an der Unterseite 53 der Lageraufnahme 51 anliegenden Stützarme 82 der Flachfeder 8 können beim Andrücken des Bremsbelags 3 an die Bremstrommel 2 entlang der Unterseite 53 der Lageraufnahme 51 gleiten, wobei die Länge der Flachfeder 8, betrachtet in Umfangsrichtung der Bremstrommel, durch Verformen der Flachfeder 8 vergrößert wird.

Bei der in Figur 4 gezeigten alternativen Ausführungsvariante wird anstelle der Flachfeder 8 eine Wellfeder 8' eingesetzt. Diese Wellfeder 8' ist an gleicher Stelle wie die anhand Figur 3 beschriebene Flachfeder 8 montiert.

Bei der Wellfeder 8' sind die Stützarme 82' im Gegensatz zur Ausführungsvariante gemäß Figur 3 nicht gleitfähig an der Unterseite 53 der Lageraufnahme 51 angelegt, sondern ortsfest an der Unterseite 53 der Lageraufnahme 51 verspannt.

Die Wellfeder 8' wird bei einem Bremshub so verformt, dass eine Längenausdehnung in Umfangsrichtung der Bremstrommel hier nicht erfolgt.

Ein besonderer Vorteil des Einsatzes einer solchen Wellfeder 8' liegt in einer vorteilhaften degressiven Federkennlinie der Wellfeder 8', bei der die Federrate anders als bei der Flachfeder 8 nicht linear ansteigend ausgebildet ist, so dass die Kraft zum Überwinden der Federkraft bei Zuspannen der Bremse insbesondere bei größeren Zuspannhüben relativ gering ausfällt und dadurch zum Überwinden der Federkraft eine geringere Kraft erforderlich ist.

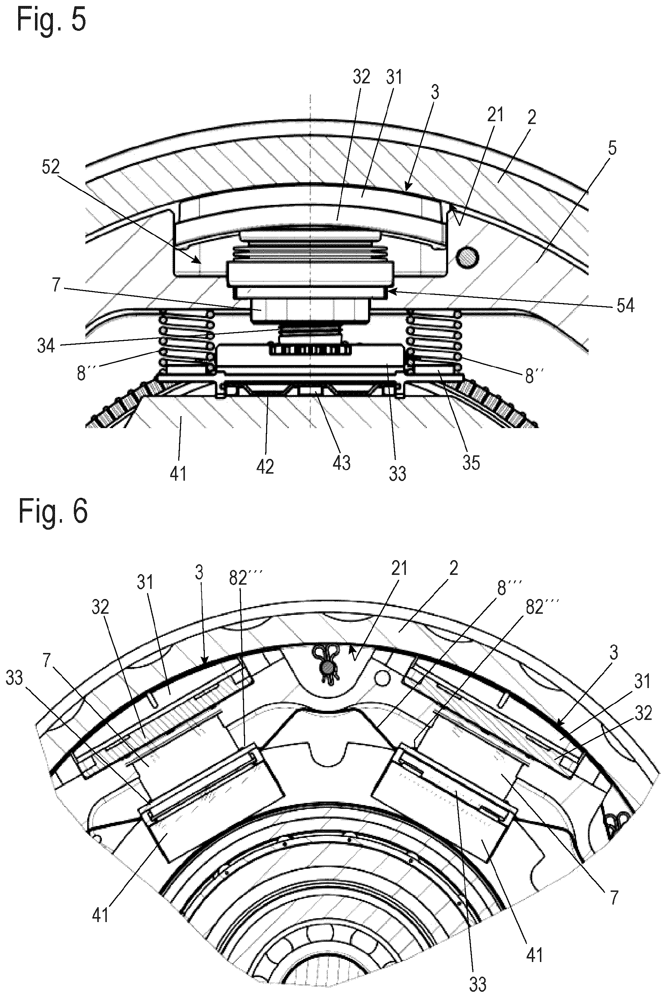

Bei der in Figur 5 gezeigten weiteren alternativen Ausführungsvariante einer erfindungsgemäßen Trommelbremse ist an dem Andruckkeil 33 wenigstens ein Federteller 35 am Andruckkeil 33 angeformt.

Dies ermöglicht den Einsatz wenigstens einer als Schraubenfeder 8" ausgebildeten Rückstellfeder. Im gezeigten Ausführungsbeispiel sind zwei solcher Schraubenfedern 8" pro Bremsbelag 3 vorgesehen.

Denkbar ist auch hier, einen solcher Federteller 35 an einem alternativ ausgebildeten Druckstück 7 vorzusehen, an dem die Schraubenfedern 8" sich gegenüber der Unterseite 53 der Lageraufnahme 51 des Ankergehäuses 5 abstützen können.

Bei der in Figur 6 gezeigten weiteren Ausführungsvariante wird wiederum eine Flachfeder 8"' eingesetzt. Die Flachfeder 8''' ist in diesem Fall zwischen zwei benachbarten Bremsbelägen 3 am Ankergehäuse 5 befestigt. Zur Fixierung der Flachfeder am Ankergehäuse 5 dient bevorzugt ein im Ankergehäuse 5 beispielsweise durch einen Sicherungssplint 91 gesicherter Rückhaltebolzen 9.

Hier ist ein erster der Stützarme 82‴ der Flachfeder 8‴ an der der Unterseite 53 der Lageraufnahme 51 zugewandten, sich senkrecht zur Zuspannrichtung r erstreckenden Fläche des Andruckkeils 33 des Druckstücks 7 und ein zweiter der Stützarme 82‴ der Flachfeder 8‴ an der der Unterseite 53 der Lageraufnahme 51 zugewandten, sich senkrecht zur Zuspannrichtung r erstreckenden Fläche des Druckstücks 7 eines zweiten Bremsbelags 3 vorgespannt angelegt.

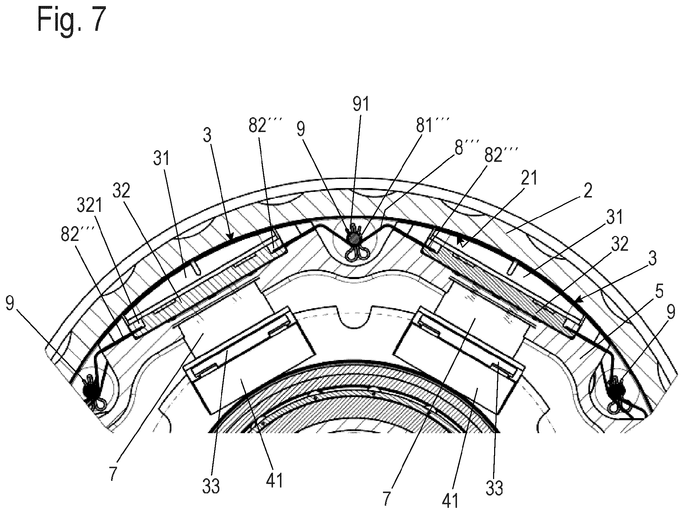

Bei der in Figur 7 gezeigten Ausführungsvariante einer erfindungsgemäßen Trommelbremse ist wiederum eine Flachfeder 8‴ vorgesehen, die über einen Rückhaltebolzen 9 am Ankergehäuse 5 befestigt ist. Die Flachfeder 8‴ ist in diesem Fall so positioniert, dass ein erster der Stützarme 82‴ an der dem Reibbelag 31 tragenden Seite des Belagträgers 32 eines ersten Bremsbelags 3 und ein zweiter der Stützarme 82‴ an der dem Reibbelag 31 tragenden Seite des Belagträgers 32 eines benachbarten zweiten Bremsbelags 3 vorgespannt anliegt.

Denkbar ist auch eine Flachfeder 8‴ mit nur einem Stützarm 82‴, die über einen Rückhaltebolzen 9 am Ankergehäuse 5 befestigt ist und bei der der Stützarm 82‴ an der den Reibbelag 31 tragenden Seite des Belagträgers 32 nur eines der Bremsbeläge 3 vorgespannt anliegt. Denkbar ist dabei auch, dass am gleichen Rückhaltebolzen 9 am Ankergehäuse 5 zwei solcher Flachfeder 8‴ mit nur einem Stützarm 82‴ befestigt sind.

Denkbar ist auch, anstelle der hier als Druckfedern wirkenden Flachfedern 8‴ Zugfedern einzusetzen, die zwischen benachbarten Bremsbelägen 3 eingesetzt sind und zum einen ebenfalls über einen Rückhaltebolzen 9 am Ankergehäuse 5 befestigt und zum zweiten fest an benachbarten Bremsbelägen 3 fixiert sind. Diese Zugfedern werden bei Zuspannung der Bremse gespannt. Nach Beendigung des Bremsvorgangs ziehen die Zugfedern dann die Bremsbeläge 3 zurück in ihre Nichtbremsstellung und bewirken so ebenfalls ein zuverlässiges Verhindern von Restschleifmomenten.

### Bezugszeichenliste

- 1: Trommelbremse

- 2: Bremstrommel
- 21: Mantelinnenfläche

- 3: Bremsbelag
- 31: Reibbelag
- 32: Belagträger
- 321: Aussparung
- 33: Andruckkeil
- 34: Gewinderohr
- 35: Federteller

- 4: Zuspanneinrichtung
- 41: Keilring
- 42: Schlitten
- 43: Wälzkörper

- 5: Ankergehäuse
- 51: Zylinderhülse
- 52: Lageraufnahme
- 53: Unterseite
- 54: Öffnung

- 6: Bremszylinderanordnung
- 61: Bremszylindergehäuse
- 62: Betriebsbremskolben
- 63: Feststellbremskolben
- 64: Stößel
- 65: Zwischenblech
- 66: Federelement
- 67: Feststellbremsdruckraum
- 68: Dichtung
- 69: Dichtung
- 7: Druckstück
- 71: Ausnehmung
- 72: Innenumfangswand

- 8, 8‴: Flachfeder
- 81: erste Abstützfläche
- 82, 82‴: Stützarm
- 8': Wellfeder
- 81': erste Abstützfläche
- 82': Stützarm
- 8": Schraubenfeder

- 9: Rückhaltebolzen
- 91: Sicherungssplint

- AR: Rotationsachse
- U: Umfangsrichtung der Bremstrommel
- r: Zuspannrichtung
- z: Richtung

## Patentansprüche

1. Radial betätigbare Trommelbremse (1) für ein Nutzfahrzeug, aufweisend
- eine um eine Rotationsachse (AR) drehbar gelagerte Bremstrommel (2),
- ein Ankergehäuse (5) mit Lageraufnahmen (51) für Bremsbeläge (3),
- wenigstens zwei in einem Aufnahmeraum der Bremstrommel (2) in jeweiligen Lageraufnahmen (52) des Ankergehäuses (5) gelagerte Bremsbeläge (3),
- wobei jeder der Bremsbeläge (3) einen Reibbelagträger (32), einen an diesem angeordneten Reibbelag (31) und ein an einer dem Reibbelag abgewandten Unterseite des Belagträgers (32) angeordnetes Druckstück (7) aufweist, das durch eine Öffnung (54) der jeweiligen Lageraufnahme (52) des Ankergehäuses (5) radial in Richtung der Rotationsachse (AR) der Bremstrommel (2) vorsteht,
- eine auf einer Zylinderhülse (51) des Ankergehäuses (5) angeordnete Zuspanneinrichtung (4) mit wenigstens einem Anpressteil, mit der die Bremsbeläge (3) an eine Mantelinnenfläche (21) der Bremstrommel (2) in einer Zuspannrichtung (r) radial zur Rotationsachse (AR) der Bremstrommel (2) anpressbar sind,
**dadurch gekennzeichnet, dass**
- in dem Aufnahmeraum der Bremstrommel (2) an jedem der Bremsbeläge (3) wenigstens eine sich an einer dem Bremsbelag (3) abgewandten Unterseite (53) der Lageraufnahme (52) des Ankergehäuses (5) anliegend abstützende Rückstellfeder vorgesehen ist, mit der der jeweilige Bremsbelag (3) aus einer an der Mantelinnenfläche (21) der Bremstrommel (2) anliegenden Bremsstellung in eine von der Mantelinnenfläche (21) der Bremstrommel (2) entfernte Nichtbremsstellung bewegbar ist.

2. Trommelbremse (1) nach Anspruch 1, **dadurch gekennzeichnet, dass** die Zuspanneinrichtung (4) einen auf der Zylinderhülse (51) des Ankergehäuses (5) parallel zur Rotationsachse (AR) der Bremstrommel (2) verschiebbaren Keilring (41) und eine in dem Aufnahmeraum (22) der Bremstrommel (2) an dem Ankergehäuse (5) drehfest angeordnete Bremszylinderanordnung (6) zur Betätigung des Keilrings (41) aufweist.

3. Trommelbremse (1) nach Anspruch 1 oder 2, **dadurch gekennzeichnet, dass** die Rückstellfeder als Flachfeder (8, 8‴) oder als Wellfeder (8') ausgebildet ist.

4. Trommelbremse (1) nach Anspruch 3, **dadurch gekennzeichnet, dass** die als Flachfeder (8) oder Wellfeder (8') ausgebildete Rückstellfeder zwischen der dem Bremsbelag (3) abgewandten Unterseite (53) der Lageraufnahme (52) des Ankergehäuses (5) und einer der Unterseite (53) der Lageraufnahme (52) zugewandten, sich senkrecht zur Zuspannrichtung (r) erstreckenden Fläche des Druckstücks (7) vorgespannt angeordnet ist.

5. Trommelbremse (1) nach Anspruch 2 und 3, **dadurch gekennzeichnet, dass** das Druckstück (7) ein an der Unterseite des Belagträgers (32) angeordnetes, sich durch die Öffnung (54) der jeweiligen Lageraufnahme (52) des Ankergehäuses (5) erstreckendes Halsstück (71) und einen an diesem angeformten oder befestigten, auf dem Keilring (41) aufsitzenden Andrucckeil (33) aufweist, wobei die Flachfeder (8) oder Wellfeder (8') sich auf der der Unterseite (53) der Lageraufnahme (51) zugewandten, sich senkrecht zur Zuspannrichtung (r) erstreckenden Fläche des Andruckkeils (33) abstützt.

6. Trommelbremse (1) nach einem der Ansprüche 3 bis 5, **dadurch gekennzeichnet, dass** die Flachfeder (8) oder Wellfeder (8') Stützarme (82, 82') aufweist, die an der Unterseite (53) der Lageraufnahme (51) anliegen.

7. Trommelbremse (1) nach Anspruch 6, **dadurch gekennzeichnet, dass** die Stützarme (82) gleitfähig an der Unterseite (53) der Lageraufnahme (51) anliegen.

8. Trommelbremse (1) nach Anspruch 6, **dadurch gekennzeichnet, dass** die Wellfeder (8') ortsfest an der Unterseite (53) der Lageraufnahme (51) verspannt anliegt.

9. Trommelbremse (1) nach einem der Ansprüche 3 bis 5, **dadurch gekennzeichnet, dass** ein erster der Stützarme (82‴) der Flachfeder (8‴) an der der Unterseite (53) der Lageraufnahme (51) zugewandten, sich senkrecht zur Zuspannrichtung (r) erstreckenden Fläche des Druckstücks (7) eines ersten Bremsbelags (3) und ein zweiter der Stützarme (82‴) der Flachfeder (8‴) an der der Unterseite (53) der Lageraufnahme (51) zugewandten, sich senkrecht zur Zuspannrichtung (r) erstreckenden Fläche des Druckstücks (7) eines zweiten Bremsbelags (3) vorgespannt anliegt.

10. Trommelbremse (1) nach Anspruch 1 oder 2, **dadurch gekennzeichnet, dass** die Rückstellfeder als Schraubenfeder (8") ausgebildet ist.

11. Trommelbremse (1) nach Anspruch 10, **dadurch gekennzeichnet, dass** die Schraubenfeder (8") zwischen einer dem Bremsbelag (3) abgewandten Unterseite (53) der Lageraufnahme (51) des Ankergehäuses (5) und einer der Unterseite (53) der Lageraufnahme (51) zugewandten, sich senkrecht zur Zuspannrichtung (r) erstreckenden Federteller (35) des Andruckkeils (33) oder des Druckstücks (7) vorgespannt angeordnet ist.

12. Trommelbremse (1) nach Anspruch 1 oder 2, **dadurch gekennzeichnet, dass** die Rückstellfeder als zwischen zwei benachbarten Bremsbelägen (3) vorgespannte Zugfeder ausgebildet ist, die so zwischen zwei benachbarten Bremsbelägen (3) vorgespannt ist, dass sie nach erfolgter Zuspannung der Bremsbeläge (3) eine Rückstellzugkraft auf die Bremsbeläge (3) ausübt.

13. Trommelbremse (1) nach dem Oberbegriff des Anspruchs 1, **dadurch gekennzeichnet, dass** in dem Aufnahmeraum der Bremstrommel (2) zwischen benachbarten Bremsbelägen (3) wenigstens eine als am Ankergehäuse (5) befestigte Flachfeder (8‴) mit wenigstens einem Stützarm (82‴) ausgebildete Rückstellfeder angeordnet ist, wobei der wenigstens eine Stützarm (82‴) an der den Reibbelag (31) tragenden Seite des Belagträgers (32) eines der Bremsbeläge (3) vorgespannt anliegt.

14. Trommelbremse (1) nach Anspruch 13, **dadurch gekennzeichnet, dass** die Rückstellfeder als am Ankergehäuse (5) befestigte Flachfeder (8‴) mit zwei Stützarmen (82‴) ausgebildet ist, wobei ein erster der Stützarme (82‴) an der den Reibbelag (31) tragenden Seite des Belagträgers (32) eines ersten Bremsbelags (3) und ein zweiter der Stützarme (82‴) an der den Reibbelag (31) tragenden Seite des Belagträgers (32) eines benachbarten zweiten Bremsbelags (3) vorgespannt anliegt.
